# FASCICULE DE BREVET EUROPEEN

(11) **EP 4 540 756 B1**
(45) Date de publication et mention de la délivrance du brevet: **04.11.2026**
(21) Numéro de dépôt: 23734568.1
(22) Date de dépôt: 20.06.2023
(51) Int. Cl.: G06K 7/08, G06K 7/015, G11B 5/008, G11B 5/49, G11B 5/80, G11B 15/62

(54) **LECTEUR DE CARTE MAGNÉTIQUE COMPRENANT UNE TÊTE DE LECTURE MAGNÉTIQUE FIXE**
MAGNETKARTENLESER MIT STATIONÄREM MAGNETLESEKOPF
MAGNETIC CARD READER COMPRISING A STATIONARY MAGNETIC READING HEAD

(30) Priorité: 20.06.2022 FR 2206050
(43) Date de publication de la demande: 23.04.2025
(73) Titulaire: Banks and Acquirers International Holding, 92150 Suresnes (FR)
(72) Inventeur: HERNANDEZ, Vincent, 26240 CLAVEYSON (FR); ANDRE, Jérôme, 26800 MONTOISON (FR)
(74) Mandataire: LLR
(86) Numéro de dépôt international: PCT/EP2023/066660
(87) Numéro de publication internationale: WO 2023/247553

(56) Documents cités:
- WO-A1-2019/138085
- FR-A1- 2 762 698
- GB-A- 1 390 794
- US-A- 5 923 019

## Description

L'invention se rapporte au domaine des lecteurs de carte magnétique ainsi qu'aux terminaux de paiement électroniques comprenant de tels lecteurs de carte magnétique.

Pour obtenir une lecture satisfaisante d'une piste magnétique d'une carte magnétique par un lecteur de carte magnétique, il est nécessaire que lors du passage de la carte magnétique dans le lecteur, la tête de lecture magnétique soit en contact avec la piste magnétique de la carte magnétique et que ce contact soit de bonne qualité. Les cartes magnétiques étant rigides, des moyens déformables de déplacement de la tête de lecture magnétique permettant de plaquer la tête de lecture magnétique sur la carte magnétique lorsque celle-ci coulisse dans un organe de guidage du lecteur de carte magnétique ont ainsi été développés. L'effort appliqué sur la tête de lecture magnétique par ces moyens déformables de déplacement de la tête de lecture magnétique doit être calculé de manière à éviter d'augmenter notablement l'effort nécessaire au passage de la carte magnétique dans le lecteur de carte afin d'éviter à un utilisateur du dispositif de percevoir une sensation de blocage lors du passage de la carte magnétique dans le lecteur.

De tels lecteurs de carte magnétique présentent des inconvénients. Tout d'abord, ils sont fragiles. En effet, en raison de la présence d'un déplacement de la tête de lecture magnétique, le raccordement électronique entre cette tête de lecture magnétique et une carte électronique du lecteur de carte magnétique se fait en utilisant un circuit imprimé flexible qui, par nature, est fragile. En outre, de tels circuits imprimés flexibles sont coûteux et complexes à intégrer lors de l'assemblage du lecteur. Au-delà des circuits imprimés flexibles, les moyens déformables de déplacement de la tête comprennent en outre des pièces coûteuse, fragiles et complexes à mettre en œuvre lors de l'assemblage. Il faut notamment les adapter à chaque type de tête de lecture magnétique. De plus, il est nécessaire de prévoir une protection vis-à-vis de l'environnement électromagnétique et celle-ci est compliquée à mettre en œuvre puisque la tête de lecture magnétique change régulièrement de position.

Le document GB 1 390 794 A décrit un lecteur de carte magnétique selon le préambule de la revendication 1.

L'invention a notamment pour but de fournir un lecteur de carte magnétique permettant de lire de manière fiable les données présentent sur une carte magnétique et qui soit robuste et simple et économique à fabriquer.

À cet effet l'invention a pour objet un lecteur de carte magnétique comprenant :
- une carte électronique destinée à recevoir et traiter des données provenant d'une carte magnétique,
- une tête de lecture magnétique destinée à lire des données contenues dans au moins une piste magnétique d'une carte magnétique et à transmettre ces données à la carte électronique,
- une zone de passage d'une carte magnétique dans laquelle est destinée à coulisser une carte magnétique et comprenant des moyens de guidage destinés à guider la carte magnétique lors d'un coulissement de la carte magnétique dans la zone de passage,
   dans lequel la tête de lecture magnétique est montée fixe sur le lecteur de carte magnétique,
- des moyens élastiques de déformation destinés à entrer en contact avec la carte magnétique afin de la déformer lors d'un coulissement de la carte magnétique dans la zone de passage de manière à permettre une lecture de la piste magnétique de la carte magnétique par la tête de lecture magnétique,
caractérisé en ce que les moyens de guidage et les moyens élastiques de déformation sont venus de matière et forment ainsi une seule pièce.

Ainsi, le fait que la tête de lecture magnétique soit montée fixe sur le lecteur permet de ne pas avoir recours à des circuits imprimés flexibles pour la connexion entre la tête de lecture magnétique et la carte électronique ce qui réduit les coûts de fabrication et facilite le montage du lecteur de carte magnétique lors de sa fabrication. En outre, le lecteur de carte magnétique ainsi obtenu est également plus robuste du fait de l'absence de circuit imprimé flexible et de moyens déformables de déplacement de la tête. Les moyens déformables de déplacement de la tête sont en effet des éléments fragiles qu'il est complexe d'implémenter sur le lecteur.

Le fait que les moyens élastiques de déformation de la carte magnétique fassent parties des moyens de guidage est avantageux car il s'agit d'une partie du lecteur de carte magnétique qui peut facilement être modifiée pour être adaptée aux différents types de cartes magnétiques ou de têtes de lecture magnétique utilisées afin d'obtenir un effort à appliquer sur la carte magnétique souhaité. Plus particulièrement, le fait que les moyens de guidage et les moyens élastiques de déformation soient venus de matière permet de simplifier la fabrication et l'entretien du lecteur de carte magnétique. En effet, le positionnement correct des moyens élastiques de déformation par rapport aux moyens de guidage est obtenu lors de la fabrication de l'élément comprenant ces deux moyens, cet élément pouvant ensuite être directement monté sur le boitier du lecteur de carte magnétique. Il n'est ainsi pas nécessaire de prévoir une étape de réglage préalable à l'utilisation du lecteur de carte magnétique afin de positionner correctement les moyens élastiques de déformation. En outre, on évite un risque de déréglage ultérieur du positionnement des moyens élastiques de déformation et donc on élimine la nécessité d'avoir recours à une ou plusieurs étapes ultérieures de manutention visant à corriger ce déréglage. Un mauvais positionnement des moyens élastiques de déformation entraine notamment un risque d'endommagement de la tête de lecture magnétique ou d'une piste magnétique de la carte magnétique. On peut prévoir que les moyens de guidage et les moyens élastiques de déformation sont fabriqués par moulage.

Une carte magnétique est une carte électronique munie d'une piste magnétique sur laquelle sont stockées des données par enregistrement magnétique. La piste magnétique de cette carte magnétique peut ainsi être lue par une tête de lecture magnétique de manière à obtenir les informations stockées dans cette carte magnétique et à éventuellement les transmettre à une carte électronique qui pourra ensuite traiter ces données. Les cartes magnétiques sont par exemple utilisées en tant que carte bancaire, carte d'accès à un parking, carte d'identification, ou encore carte d'accès à une pièce sécurisée.

L'invention peut également comporter l'une ou plusieurs des caractéristiques optionnelles suivantes, prises seules ou en combinaison.

La tête de lecture magnétique est soudée sur la carte électronique. L'assemblage de la tête de lecture magnétique est ainsi facilité puisqu'elle est directement liée à la carte électronique par soudage, sans intermédiaire. L'élimination de ces intermédiaires facilite non seulement l'assemblage mais réduit par la même occasion les coûts de fabrication et rend le dispositif plus robuste puisque, le nombre de pièces totales dans le dispositif diminuant, le risque d'usure global en est d'autant réduit. En outre, le fait que la tête de lecture magnétique soit directement soudée sur la carte électronique permet d'améliorer la sécurité du lecteur de carte magnétique car l'interception frauduleuse de données transitant depuis la tête de lecture magnétique jusqu'à la carte électronique est alors plus compliquée. Cette interception est rendue plus compliquée par le lien plus direct entre la tête de lecture magnétique et la carte électronique, mais aussi par le fait que la carte électronique forme alors une barrière couvrant une partie de la tête de lecture magnétique et limitant ainsi les accès à celle-ci. On peut en outre facilement prévoir de renforcer la sécurité du dispositif en ajoutant dans une couche de la carte électronique un treillis destiné à détecter une tentative de perçage d'une couche de la carte électronique afin de sécuriser la transmission de données entre la tête de lecture magnétique et la carte électronique.

Les moyens élastiques de déformation comprennent au moins un organe d'appui destiné à réaliser au moins un appui contre au moins une portion de la carte magnétique de manière à la déformer de sorte que la piste magnétique de la carte magnétique soit en contact avec la tête de lecture magnétique sur toute sa longueur lors d'un coulissement de la carte magnétique dans la zone de passage. Ainsi, c'est la déformation de la carte magnétique et non le déplacement de la tête de lecture magnétique qui assure un contact permanent entre la piste magnétique de la carte magnétique et la tête de lecture magnétique lors d'un coulissement de la carte magnétique dans la zone de passage. On remarque que la déformation de la carte magnétique est telle que la piste magnétique est en contact avec la tête de lecture magnétique sur toute sa longueur, c'est-à-dire que piste magnétique est plaquée au contact de la tête de lecture magnétique par l'organe d'appui depuis une de ses extrémités longitudinales puis coulisse de sorte que la piste magnétique parcourt sur toute sa longueur la tête de lecture magnétique jusqu'à son autre extrémité longitudinale. On assure ainsi que la totalité de la piste magnétique a été correctement lue par la tête de lecture magnétique.

L'organe d'appui est destiné à réaliser un appui contre une portion de la carte magnétique située en regard de la tête de lecture magnétique de manière à presser la piste magnétique de la carte magnétique contre la tête de lecture magnétique. On réduit ainsi le chemin de passage à l'endroit où a lieu la lecture de la piste magnétique de la carte magnétique par la tête de lecture magnétique. Il s'agit d'un moyen simple et efficace de plaquer la piste magnétique au contact de la tête de lecture magnétique.

L'organe d'appui a une forme convexe en direction de la tête de lecture magnétique et présente une courbure de surface identique à une courbure de surface de la tête de lecture magnétique. Le maintien de la carte à l'endroit où la tête de lecture magnétique lit la piste magnétique est ainsi amélioré. En effet, on crée ainsi une symétrie entre les deux éléments maintenant de part et d'autre la carte magnétique, ce qui assure une meilleure stabilité que si les courbures de surface de la tête de lecture magnétique et de l'organe d'appui étaient différentes. En outre, reproduire sur l'organe d'appui la forme de la courbure de surface de la tête de lecture magnétique est simple à réaliser de sorte que l'organe d'appui peut être facilement modifié et adapté en fonction des têtes de lecture magnétique utilisées.

Les moyens élastiques de déformation sont configurés pour que, en position de repos, l'organe d'appui repose sur la tête de lecture magnétique sans appliquer d'effort sur celle-ci. Ainsi, les moyens élastiques de déformation n'appliquent pas d'effort au repos ce qui réduit leurs usures et augmente donc leurs durées de vie. En outre, le fait qu'ils n'appliquent pas d'effort sur la tête de lecture magnétique au repos permet d'éviter d'endommager cette dernière. Dans cette configuration, il est en outre certain que, quelle que soit l'épaisseur de la carte magnétique, celle-ci sollicitera les moyens élastiques de déformation lorsqu'elle coulissera au niveau de la tête de lecture magnétique de sorte que sa piste de lecture magnétique soit plaquée contre la tête de lecture magnétique. Selon des modes de réalisation alternatifs, on peut prévoir que les moyens élastiques de déformation sont configurés pour que, en position de repos, l'organe d'appui s'étend en regard et à une distance prédéterminée de la tête de lecture magnétique. Cette distance prédéterminée est notamment définie comme étant inférieure à une épaisseur d'une carte magnétique destinée à coulisser dans la zone de passage comprenant ces moyens élastiques de déformation afin que la carte magnétique sollicite les moyens élastiques déformation lors d'un coulissement dans cette zone de passage.

Les moyens élastiques de déformation comprennent deux organes d'appui destinés à réaliser un appui contre deux portions de la carte magnétique situées de part et d'autre de la tête de lecture magnétique de manière à presser la piste magnétique de la carte magnétique contre la tête de lecture magnétique. Ces deux appuis de part et d'autre de la tête de lecture magnétique créent trois régions de déformation de la carte magnétique, à savoir les deux portions de la carte magnétique où les organes d'appui réalisent un appui et la portion de la carte magnétique, comprenant la piste magnétique, qui est plaquée contre la tête de lecture magnétique afin d'être lue par celle-ci. Ces trois déformations assurent ainsi une meilleure stabilité de la carte lors du coulissement de la carte magnétique dans la zone de passage et assurent également un maintien d'un contact de bonne qualité entre la piste magnétique de la carte magnétique et la tête de lecture magnétique sur toute la longueur de la piste magnétique au cours du coulissement de la carte magnétique.

Les moyens élastiques de déformation comprennent au moins trois organes de rappel élastique destinés à rappeler les moyens élastiques de déformation dans une position de repos lors ou après un coulissement de la carte magnétique dans la zone de passage. Ces trois organes de rappel élastique permettent aux moyens élastiques de déformation de s'adapter à la manière avec laquelle un utilisateur introduit la carte magnétique dans la zone de passage et d'offrir ainsi un meilleur ressenti à l'utilisateur lors du passage de la carte. En effet, ces trois organes de rappel élastique permettent de créer une articulation mécanique pour les moyens élastiques de déformation qui peuvent ainsi compenser un défaut dans l'alignement de la carte magnétique lorsque celle-ci se présente devant les moyens élastiques de déformation et évitent à l'utilisateur de ressentir un blocage lors du coulissement.

Les moyens élastiques de déformation sont configurés de manière à permettre un passage de la carte magnétique dans la zone de passage selon un coulissement suivant un premier sens de passage ainsi que selon un coulissement suivant un deuxième sens de passage opposé au premier sens de passage. On notera que les moyens élastiques de déformation sont sensiblement symétriques axialement. Selon un mode de réalisation, les moyens élastiques de déformation présentent un axe de symétrie axiale. Il s'agit d'une configuration permettant de réaliser simplement des moyens élastiques de déformation permettant un passage aisé de la carte magnétique dans la zone de passage dans un sens ou dans l'autre. L'utilisation du lecteur de carte magnétique est donc facilitée et on réduit le risque d'endommagement de la tête de lecture magnétique ou d'une piste magnétique de la carte magnétique qui serait causé par une insertion de la carte magnétique selon un sens d'insertion inapproprié. En outre, il n'est pas nécessaire de prévoir un réglage spécifique lorsqu'un sens d'insertion en particulier est désiré.

L'invention a également pour objet un terminal de paiement électronique comprenant un lecteur de carte magnétique tel que décrit précédemment.

Avantageusement, la zone de passage d'une carte magnétique est formée par une fente ménagée dans un bord inférieur du terminal de paiement électronique. Ainsi, il est possible de prévoir que le terminal de paiement électronique présente un encombrement réduit par rapport à un terminal de paiement électronique dans lequel la fente est ménagée dans une paroi latérale du terminal. En outre, le mouvement à réaliser pour faire coulisser la carte magnétique dans la fente est ainsi plus simple et ergonomique pour l'utilisateur.

### Brève description des figures

L'invention sera mieux comprise à la lecture de la description qui va suivre donnée uniquement à titre d'exemples non limitatifs et faite en se référant aux dessins annexés dans lesquels :
[Fig.1] la [Fig.1] est une vue en perspective d'un terminal de paiement électronique comprenant un lecteur de carte magnétique selon un premier mode de réalisation de l'invention ;
[Fig.2] la [Fig.2] est une vue en coupe du terminal de paiement électronique de la [Fig.1] ;
[Fig.3] la [Fig.3] est une éclatée représentant une carte magnétique et une partie des composants du lecteur de carte magnétique du terminal de paiement électronique des figures 1 et 2 ;
[Fig.4] la [Fig.4] est une vue en perspective des moyens élastiques de déformation ;
[Fig.5] la [Fig.5] est une vue similaire à la [Fig.2] d'un terminal de paiement électronique comprenant un lecteur de carte magnétique selon un deuxième mode de réalisation.

### Description détaillée

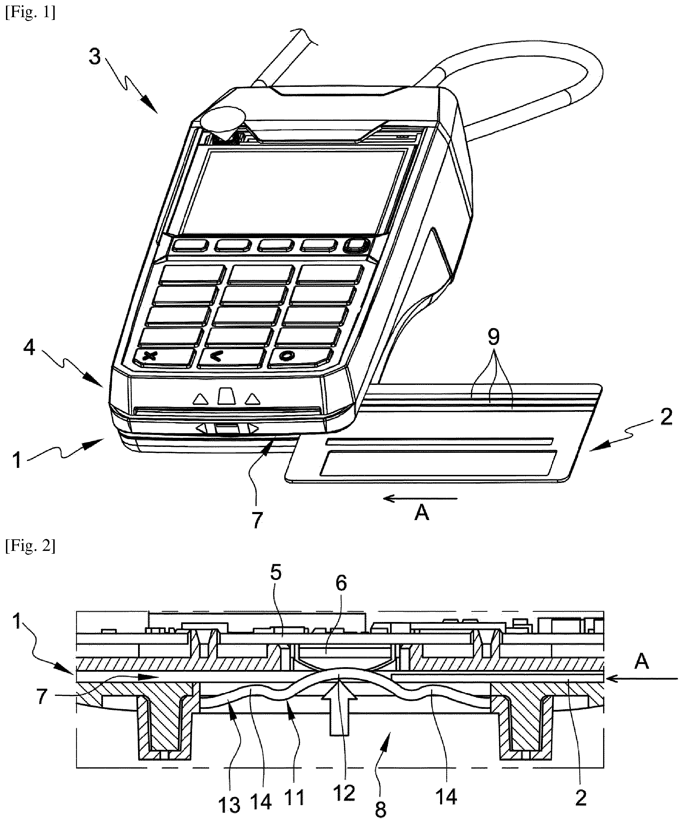

On décrit ci-après, par référence aux figures 1 à 7 deux modes de réalisation d'un lecteur 1 de carte 2 magnétique selon l'invention, chacun intégré dans un terminal 3 de paiement électronique selon l'invention.

Le premier mode de réalisation est représenté aux figures 1 à 4. Le terminal 3 de paiement électronique comprend donc le lecteur 1 de carte magnétique selon l'invention ainsi qu'un lecteur 4 de carte à puces classique (voir [Fig.1]). Le terminal 3 de paiement électronique comprend deux bords latéraux, un bord supérieur et un bord inférieur. Les bords supérieur et inférieur s'entendent par les orientations habituelles d'utilisation d'un terminal 3 de paiement électronique. Ainsi, le bord supérieur correspond au bord distal, c'est-à-dire au bord longitudinal le plus éloigné de l'utilisateur lorsqu'il utilise le terminal 3 de paiement électronique et le bord inférieur correspond au bord proximal, c'est-à-dire au bord longitudinal le plus proche de l'utilisateur lorsqu'il utilise le terminal 3 de paiement électronique. Dans le cas présent, en plus de la localisation classique du lecteur 4 de carte à puces au niveau du bord inférieur, le lecteur 1 de carte 2 magnétique est lui aussi situé au niveau du bord inférieur du terminal 3 de paiement électronique. Bien entendu, selon d'autres modes de réalisation, le terminal pourra être d'un type autre qu'un terminal 3 de paiement électronique, par exemple un terminal de contrôle d'accès à un parking, un terminal d'identification, ou un terminal de contrôle d'accès à une pièce sécurisée.

Le lecteur 1 de carte 2 magnétique comprend notamment une carte 5 électronique, une tête 6 de lecture magnétique, une zone 7 de passage d'une carte 2 magnétique et des moyens 8 de guidage de la carte 2 magnétique (voir [Fig.2]).

Dans le cas présent, le terminal étant un terminal 3 de paiement électronique, la carte 2 magnétique est une carte de type carte de paiement. Elle comprend trois pistes 9 magnétiques destinées au stockage magnétique de données. Bien entendu, la carte 2 magnétique peut comprendre un nombre différent de pistes 9 magnétiques en fonction des modes de réalisation.

La carte 5 électronique est destinée à recevoir et traiter des données provenant de la carte 2 magnétique, ces données étant lues et transmises par la tête 6 de lecture magnétique.

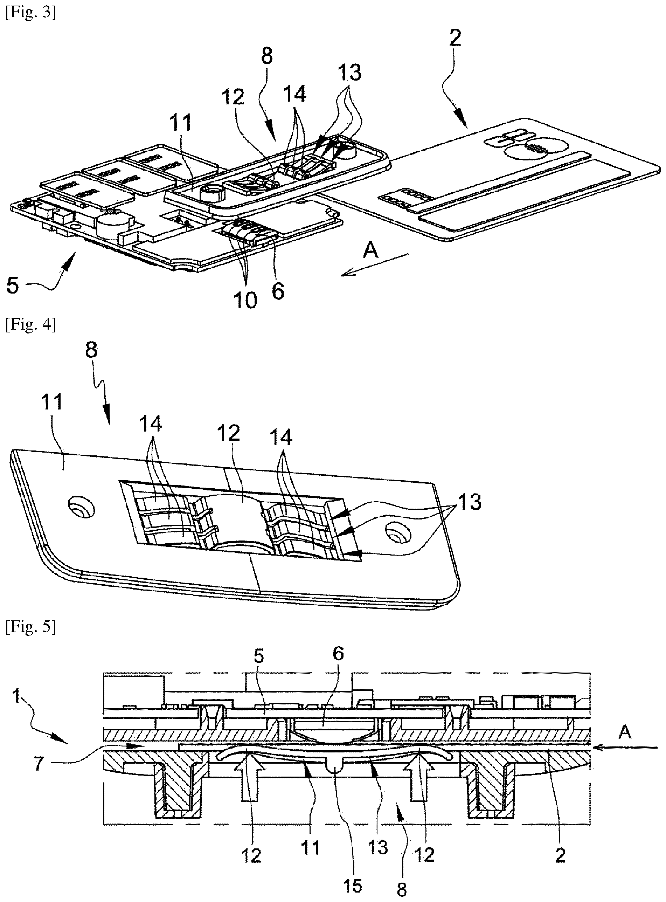

La tête 6 de lecture magnétique est destinée à lire des données contenues dans au moins une des pistes 9 magnétiques de la carte 2 magnétique et à transmettre ces données à la carte 5 électronique afin qu'elles y soient traitées. Dans le cas présent, la carte 2 électronique comprend trois pistes 9 magnétiques et la tête 6 de lecture magnétique comprend en conséquence un boitier présentant trois entrefers 10 destinés chacun à permettre la lecture d'une des pistes 9 magnétiques de la carte 2 magnétique. La tête 6 de lecture magnétique est montée fixe sur la carte 5 électronique. Plus particulièrement, la tête 6 de lecture magnétique est soudée directement sur la carte 5 électronique (voir [Fig.3]). On évite ainsi la présence d'intermédiaires de connexion et on réduit par conséquent les coûts de production tout en diminuant la fragilité du dispositif de tels intermédiaires de connexion comprennent généralement des pièces sensibles à l'usure mécanique et fragiles tel qu'un circuit imprimé flexible. Bien entendu, selon des mondes de réalisation alternatifs, on peut prévoir que la tête 6 de lecture magnétique est fixée sur la carte 2 électronique par tout autre moyen de fixation approprié.

La zone 7 de passage de la carte 2 magnétique est formée par une fente ménagée dans le bord inférieur du terminal 3 de paiement électronique. Cette zone 7 de passage est celle dans laquelle est destinée à coulisser la carte 2 magnétique lorsqu'un utilisateur souhaite l'utiliser sur le terminal 3 de paiement électronique. Cette zone 7 de passage de la carte 2 magnétique comprend les moyens 8 de guidage qui sont destinés à guider la carte 2 magnétique lors de son coulissement dans la fente.

Dans le cas présent, les moyens 8 de guidage comprennent des moyens 11 élastiques de déformation destinés à entrer en contact avec la carte 2 magnétique afin de la déformer lors d'un coulissement de la carte 2 magnétique dans la zone 7 de passage - c'est-à-dire dans la fente - de manière à permettre une lecture des pistes 9 magnétiques de la carte 2 magnétique par la tête 6 de lecture magnétique. Plus particulièrement, les moyens 8 de guidage et les moyens 11 élastiques de déformation sont venus de matière. Ainsi, les moyens 8 de guidage et les moyens 11 élastiques de déformation ne forment qu'une seule pièce qui peut être fabriquée par toute technique connue de l'homme du métier, par exemple par moulage ou par fabrication additive. Ainsi, il est aisé de prévoir que le positionnement des moyens 11 élastiques de déformation par rapport au moyens 8 de guidage soit correct. En particulier, il n'est pas nécessaire de prévoir une étape préalable de réglage du positionnement des moyens 11 élastiques de déformation. On évite en outre un risque de déréglage ultérieur du positionnement des moyens 11 élastiques de déformation.

Ici, les moyens 11 élastiques de déformation comprennent un seul organe 12 d'appui qui est destiné à réaliser un appui contre une portion de la carte 2 magnétique située en regard de la tête 6 de lecture magnétique de manière à presser les trois pistes 9 magnétiques de la carte 2 magnétique contre les trois entrefers 10 de la tête 6 de lecture magnétique afin d'assurer un contact de bonne qualité entre ces éléments. Sur la [Fig.2], la carte 2 magnétique est représentée à un stade de son coulissement dans la zone 7 de passage où elle n'a pas encore atteint l'organe 12 d'appui et n'a pas encore été déformée par les moyens 11 élastiques de déformation. L'organe 12 d'appui a une forme convexe en direction de la tête 6 de lecture magnétique et présente une courbure de surface identique à la courbure de surface de la tête 6 de lecture magnétique. Comme indiqué précédemment, cette configuration est avantageuse pour améliorer le maintien de la carte 2 magnétique dans la zone 7 de passage. En position de repos (voir [Fig.2]), les moyens 11 élastiques de déformation sont configurés pour que l'organe 12 d'appui repose sur la tête 6 de lecture magnétique sans appliquer d'effort sur celle-ci. Comme cela est visible sur la [Fig.2], au repos, il y a donc un contact entre l'organe 12 d'appui et la tête 6 de lecture magnétique, ce qui permet de soulager l'organe 12 d'appui. Toutefois, comme l'effort appliqué par l'organe 12 d'appui sur la tête 6 de lecture magnétique est nul, cette dernière ne risque pas d'être endommagée.

L'organe 12 d'appui est relié au reste des moyens 11 élastiques de déformation au moyen de trois organes 13 de rappel élastique destinés à rappeler les moyens 11 élastique de déformation dans une position de repos lors ou après un coulissement de la carte 2 magnétique dans la zone 7 de passage. Dans le cas présent, chaque organe de rappel élastique est composé d'une paire de languettes 14 élastiques chacune disposée de part et d'autre de l'organe 12 d'appui. Elles exercent sur cet organe 12 d'appui un effort tendant à le déplacer en position de repos, c'est-à-dire en direction de la tête 6 de lecture magnétique lorsque l'organe 12 d'appui est déplacé dans le sens inverse, ce qui est notamment le cas lors d'un coulissement d'une carte 2 magnétique dans la zone 7 de passage.

Dans le cas présent, les moyens 11 élastiques de déformation sont réalisés en matériaux plastiques, par exemple en polyoxyméthylène (POM), qui sont des matériaux présentant des propriétés de rugosité de surface et de résistance dans le temps satisfaisantes pour l'utilisation souhaitée. De préférence, les moyens 8 de guidage sont réalisés dans le même matériaux que celui utilisé pour les moyens 11 élastiques de déformation. Dans le cas présent, les moyens 8 de guidage sont donc réalisés en matériaux plastiques, par exemple en polyoxyméthylène (POM).

Les moyens 11 élastiques de déformation sont configurés de manière à permettre un coulissement de la carte 2 magnétique dans la zone 7 de passage selon un premier sens de coulissement et selon un deuxième sens de coulissement opposé au premier sens de coulissement. Selon le présent mode de réalisation, les moyens 11 élastiques de déformation présentent à cet effet un axe de symétrie axiale permettant le coulissement de la carte 2 magnétique dans la zone 7 de passage quel que soit le sens de coulissement.

On remarque qu'il est possible d'adapter facilement les efforts appliqués par les moyens 11 élastiques de déformation en fonction du produit souhaité en modifiant, par exemple, la géométrie et/ou les matériaux utilisés pour la réalisation des moyens 11 élastiques de déformation. Cette adaptation peut se faire indépendamment d'un éventuel fournisseur de la tête 6 de lecture magnétique, ce qui est particulièrement avantageux. Typiquement, l'effort appliqué par l'organe 12 d'appui contre la portion de la carte 2 magnétique contre laquelle il appuie est de l'ordre de 4 Newton. Cet effort est suffisamment élevé pour permettre un contact satisfaisant entre la carte 2 magnétique et la tête 6 de lecture magnétique et suffisamment faible pour ne pas risquer d'endommager la carte 2 magnétique et/ou la tête 6 de lecture magnétique. Bien entendu, cet effort peut être adapté en fonction des caractéristiques du lecteur 1 et de la carte 2 magnétique.

On décrit ci-après le fonctionnement du terminal 3 de paiement électronique comprenant le lecteur 1 de carte 2 magnétique selon le premier mode de réalisation de l'invention.

Lorsqu'un utilisateur souhaite réaliser un paiement avec sa carte 2 magnétique, qui est donc dans le cas présent une carte bancaire, il l'introduit dans la zone 7 de passage de la carte 2 magnétique formée par la fente ménagée dans le bord inférieur du terminal 3 de paiement électronique avec les pistes 9 magnétiques de la carte 2 magnétique dirigées vers le haut par référence à la [Fig.1]. L'utilisateur fait coulisser la carte 2 magnétique suivant la direction A dans cette fente et la carte 2 magnétique est, dans un premier temps, guidée par des moyens 8 de guidage formés par les parois du boitier du terminal 3 de paiement électronique. La carte 2 magnétique est notamment en appui dans le fond de la fente par son bord supérieur. L'utilisateur continue de faire coulisser la carte 2 magnétique selon la direction A et, à partir du moment où la carte 2 magnétique atteint l'organe 12 d'appui des moyens 11 élastiques de déformation, la carte 2 magnétique déplace cet organe 12 d'appui à l'encontre de sa position de repos et ce dernier exerce en retour, sous l'effet des organes 13 de rappel élastique, un effort contre la carte 2 magnétique de manière à la déformer et plaquer les portions des pistes 9 magnétiques qui passent en regard des entrefers 10 de la tête 6 de lecture magnétique contre ces entrefers 10. Grâce à ce contact entre les pistes 9 magnétique et les entrefers 10, une bonne qualité de lecture des pistes 9 magnétiques est obtenue. Les moyens 11 élastiques de déformation sont configurés pour que l'effort appliqué sur la carte 2 magnétique soit assez élevé pour déformer suffisamment la carte 2 magnétique de manière à établir un contact satisfaisant avec la tête 6 de lecture magnétique et pas trop élevé pour éviter de créer pour l'utilisateur une sensation de butée ou de discontinuité dans le mouvement de coulissement de la carte 2 magnétique. Une telle discontinuité dans le mouvement de coulissement, au-delà d'être préjudiciable à l'expérience de l'utilisateur, nuirait également à la qualité de la lecture de la carte 2 magnétique. Tout au long du coulissement de la carte 2 magnétique, l'organe 12 d'appui presse successivement une portion des pistes 9 magnétiques en regard des entrefers 10 des têtes 6 de lecture magnétique de sorte qu'à la fin du coulissement, les trois pistes 9 magnétiques ont chacune été lue sur toute leur longueur. Une fois que l'organe 12 d'appui n'est plus déplacé par la carte 2 magnétique, les organes 13 de rappel élastique le rappellent en position de repos de sorte que l'organe 12 d'appui est prêt à presser une autre carte 2 magnétique contre la tête 6 de lecture magnétique. Les données qui ont été lues par la tête 6 de lecture magnétique sont transmises directement à la carte 5 électronique qui pourra les traiter de manière connue.

On décrit ci-après par référence à la [Fig.5], un terminal 3 de paiement électronique comprenant un lecteur 1 de carte 2 magnétique selon un deuxième mode de réalisation de l'invention. Par soucis de clarté, les éléments homologues entre les deux modes de réalisation sont désignés par une même référence numérique. On décrit ci-après pour le deuxième mode de réalisation, uniquement les différences par rapport au premier mode de réalisation.

Le lecteur 1 de carte 2 magnétique selon le deuxième mode de réalisation diffère du lecteur 1 de carte 2 magnétique du premier mode de réalisation uniquement par ses moyens 11 élastiques de déformation.

Selon le second mode de réalisation, les moyens 11 élastiques de déformation comprennent deux organes 12 d'appui destinés à réaliser un appui contre deux portions de la carte 2 magnétique situées de part et d'autre de la tête 6 de lecture magnétique de manière à presser les pistes 9 magnétiques de la carte 2 magnétique contre les entrefers 10 de la tête 6 de lecture magnétique (voir [Fig.5]). Ces deux appuis de part et d'autre de la tête 6 de lecture magnétique créent trois régions de déformation de la carte 2 magnétique, à savoir les deux portions de la carte 2 magnétique où les organes 12 d'appui réalisent un appui et la portion de la carte 2 magnétique, comprenant les pistes 9 magnétiques, qui est plaquée contre les entrefers 10 de la tête 6 de lecture magnétique. Ces trois déformations assurent ainsi une meilleure stabilité de la carte 2 magnétique lors du coulissement dans la fente et assurent également un maintien d'un contact de bonne qualité entre les pistes 9 magnétiques de la carte 2 magnétique et la tête 6 de lecture magnétique sur toute la longueur des pistes 9 magnétiques au cours du coulissement de la carte 2 magnétique devant la tête 6 de lecture magnétique. La déformation provoquée par les moyens 11 élastiques de déformation entraine l'application d'un effort de l'ordre de 4 Newton sur la portion de la carte 2 magnétique qui est plaquée contre la tête 6 de lecture magnétique. Cet effort est suffisamment élevé pour permettre un contact satisfaisant entre la carte 2 magnétique et la tête de lecture magnétique et suffisamment faible pour ne pas risquer d'endommager la carte 2 magnétique et/ou la tête 6 de lecture magnétique. Bien entendu, cet effort peut être adapté en fonction des caractéristiques du lecteur 1 et de la carte 2 magnétique.

Selon ce second mode de réalisation, les moyens 11 élastiques de déformation comprennent une poutre 15 reliant ces moyens 11 élastiques de déformation aux moyens 8 de guidage. La poutre 15 est venue de matière avec les moyens 8 de guidage. Cette poutre 15 se déforme par torsion au passage de la carte.

De la même manière que pour le premier mode de réalisation, chaque organe 12 d'appui est relié au reste des moyens 11 élastiques de déformation au moyen de trois organes 13 de rappel élastique destinés à rappeler les moyens 11 élastique de déformation dans une position de repos lors ou après un coulissement de la carte 2 magnétique dans la zone 7 de passage. Bien entendu, le nombre d'organe 13 de rappel élastique peut varier selon les modes de réalisation.

On décrit ci-après le fonctionnement du terminal 3 de paiement électronique comprenant le lecteur 1 de carte 2 magnétique selon le deuxième mode de réalisation de l'invention.

Lorsqu'un utilisateur souhaite réaliser un paiement avec sa carte 2 magnétique, qui est donc dans le cas présent une carte bancaire, il l'introduit dans la zone 7 de passage de la carte 2 magnétique formée par la fente ménagée dans le bord inférieur du terminal 3 de paiement électronique avec les pistes 9 magnétiques de la carte 2 magnétique dirigées vers le haut par référence à la [Fig.1]. L'utilisateur fait coulisser la carte 2 magnétique suivant la direction A dans cette fente et la carte 2 magnétique est, dans un premier temps, guidée par des moyens 8 de guidage qui sont formés par les parois du boitier du terminal 3 de paiement électronique. La carte 2 magnétique est notamment en appui dans le fond de la fente par son bord supérieur. L'utilisateur continue de faire coulisser la carte 2 magnétique selon la direction A et, à partir du moment où la carte 2 magnétique atteint le premier des deux organes 12 d'appui des moyens 11 élastiques de déformation, la carte 2 magnétique déplace cet organe 12 d'appui à l'encontre de sa position de repos et ce dernier exerce en retour, sous l'effet des organes 13 de rappel élastique, un effort contre la carte 2 magnétique de manière à la déformer et réaliser un appui contre une portion de la carte 2 magnétique située en décalage par rapport à la tête de lecture ([Fig.3]). L'utilisateur continue à faire coulisser la carte 2 magnétique dans la fente. La déformation provoquée par le premier organe 12 d'appui est alors déjà suffisante pour plaquer les pistes 9 magnétiques contre les entrefers 10 de la tête 6 de lecture magnétique lorsque les pistes 9 magnétiques arrivent en regard de ces entrefers 10. L'utilisateur continue encore à faire coulisser la carte 2 magnétique dans la fente de sorte que la carte 2 magnétique déplace le deuxième organe 12 d'appui à l'encontre de sa position de repos et ce dernier exerce en retour, sous l'effet des organes 13 de rappel élastique, un effort contre la carte 2 magnétique de manière à la déformer et réaliser un appui contre une deuxième portion de la carte 2 magnétique située en décalage par rapport à la tête 6 de lecture magnétique. Ainsi, dans cette configuration, les deux organes 12 d'appui réalisent des appuis sur des portions de la carte 2 magnétique situées de part et d'autre de la tête 6 de lecture magnétique. C'est dans cette configuration que l'application de pression sur la carte 2 magnétique afin de maintenir en contact les pistes 9 magnétiques et les entrefers 10 de la tête 6 de lecture magnétique est de meilleure qualité. L'utilisateur finit ensuite de faire coulisser la carte 2 magnétique dans la fente de sorte que les pistes 9 magnétiques auront chacune été lue sur tout leur longueur par la tête 6 de lecture magnétique. Les données lues par la tête 6 de lecture magnétique sont ensuite transmises à la carte 5 électronique à laquelle elle est soudée qui les traite de manière connue. Dans ce mode de réalisation, l'effort appliqué par les organes 12 d'appui étant réparti sur deux organes 12 d'appui, le coulissement de la carte 2 magnétique dans la fente est ainsi facilité et plus fluide.

L'invention n'est pas limitée aux modes de réalisation présentés et d'autres modes de réalisation, limités par les revendications, apparaîtront clairement à l'homme du métier.

### Liste de références

1 : lecteur de carte magnétique
2 : carte magnétique
3 : terminal de paiement électronique
4 : lecteur de carte à puces
5 : carte électronique
6 : tête de lecture magnétique
7 : zone de passage de la carte magnétique
8 : moyens de guidage de la carte magnétique
9 : piste magnétique
10 : entrefer
11 : moyens élastiques de déformation de la carte magnétique
12 : organe d'appui
13 : organe de rappel élastique
14 : languette de l'organe de rappel élastique
15 : poutre

## Revendications

1. Lecteur (1) de carte (2) magnétique comprenant :
- une carte (5) électronique destinée à recevoir et traiter des données provenant d'une carte (2) magnétique,
- une tête (6) de lecture magnétique destinée à lire des données contenues dans au moins une piste (9) magnétique d'une carte magnétique et à transmettre ces données à la carte (5) électronique,
- une zone (7) de passage d'une carte magnétique dans laquelle est destinée à coulisser une carte (2) magnétique et comprenant des moyens (8) de guidage destinés à guider la carte (2) magnétique lors d'un coulissement de la carte (2) magnétique dans la zone (7) de passage, dans lequel la tête (6) de lecture magnétique est montée fixe sur le lecteur (1) de carte magnétique,
- des moyens (11) élastiques de déformation destinés à entrer en contact avec la carte (2) magnétique afin de la déformer lors d'un coulissement de la carte (2) magnétique dans la zone (7) de passage de manière à permettre une lecture de la piste (9) magnétique de la carte (2) magnétique par la tête (6) de lecture magnétique,
**caractérisé en ce que** les moyens (8) de guidage et les moyens (11) élastiques de déformation sont venus de matière et forment ainsi une seule pièce.

2. Lecteur (1) de carte (2) magnétique selon la revendication 1, dans lequel la tête (6) de lecture magnétique est soudée sur la carte (5) électronique.

3. Lecteur (1) de carte (2) magnétique selon la revendication 1 ou 2, dans lequel les moyens (11) élastiques de déformation comprennent au moins un organe (12) d'appui destiné à réaliser au moins un appui contre au moins une portion de la carte (2) magnétique de manière à la déformer de sorte que la piste (9) magnétique de la carte (2) magnétique soit en contact avec la tête (6) de lecture magnétique sur toute sa longueur lors d'un coulissement de la carte (2) magnétique dans la zone (7) de passage.

4. Lecteur (1) de carte (2) magnétique selon la revendication 3, dans lequel l'organe (12) d'appui est destiné à réaliser un appui contre une portion de la carte (2) magnétique située en regard de la tête (6) de lecture magnétique de manière à presser la piste (9) magnétique de la carte (2) magnétique contre la tête (6) de lecture magnétique.

5. Lecteur (1) de carte (2) magnétique selon la revendication 4, dans lequel l'organe (12) d'appui a une forme convexe en direction de la tête (6) de lecture magnétique et présente une courbure de surface identique à une courbure de surface de la tête (6) de lecture magnétique.

6. Lecteur (1) de carte (2) magnétique selon la revendication 4 ou 5, dans lequel les moyens (11) élastiques de déformation sont configurés pour que, en position de repos, l'organe (12) d'appui repose sur la tête (6) de lecture magnétique sans appliquer d'effort sur celle-ci.

7. Lecteur (1) de carte (2) magnétique selon la revendication 3, dans lequel les moyens (11) élastiques de déformation comprennent deux organes (12) d'appui destinés à réaliser un appui contre deux portions de la carte (2) magnétique situées de part et d'autre de la tête (6) de lecture magnétique de manière à presser la piste (9) magnétique de la carte (2) magnétique contre la tête (6) de lecture magnétique.

8. Lecteur (1) de carte (2) magnétique selon l'une quelconque des revendications précédentes, dans lequel les moyens (11) élastiques de déformation comprennent au moins trois organes (13) de rappel élastique destinés à rappeler les moyens (11) élastiques de déformation dans une position de repos lors ou après un coulissement de la carte (2) magnétique dans la zone (7) de passage.

9. Terminal (3) de paiement électronique comprenant un lecteur (1) de carte (2) magnétique selon l'une quelconque des revendications précédentes.

10. Terminal (3) de paiement électronique selon la revendication 9, dans lequel la zone (7) de passage d'une carte (2) magnétique est formée par une fente ménagée dans un bord inférieur du terminal (3) de paiement électronique.

## Patentansprüche

1. Lesegerät (1) für Magnetkarte (2), umfassend:
- eine elektronische Karte (5) zum Empfangen und Verarbeiten von Daten von einer Magnetkarte (2),
- einen magnetischen Lesekopf (6) zum Lesen von Daten, die in mindestens einer Magnetspur (9) einer Magnetkarte enthalten sind, und zum Übertragen dieser Daten an die elektronische Karte (5),
- eine Durchzieh-Zone (7) zum Durchziehen einer Magnetkarte, in der eine Magnetkarte (2) zum Gleiten bestimmt ist, und umfassend Führungsmittel (8) zum Führen der Magnetkarte (2) bei einem Gleiten der Magnetkarte (2) in der Durchzieh-Zone (7), wobei der magnetische Lesekopf (6) an dem Lesegerät (1) für Magnetkarte ortsfest montiert ist,
- elastische Verformungsmittel (11), die dazu bestimmt sind, mit der Magnetkarte (2) in Kontakt zu kommen, um sie bei einem Gleiten der Magnetkarte (2) in der Durchzieh-Zone (7) so zu verformen, dass sie ein Lesen der Magnetspur (9) der Magnetkarte (2) durch den magnetischen Lesekopf (6) gestatten,
**dadurch gekennzeichnet, dass** die Führungsmittel (8) und die elastischen Verformungsmittel (11) einstückig gebildet sind und ein einziges Teil bilden.

2. Lesegerät (1) für Magnetkarte (2) nach Anspruch 1, wobei der magnetische Lesekopf (6) auf die elektronische Karte (5) geschweißt ist.

3. Lesegerät (1) für Magnetkarte (2) nach Anspruch 1 oder 2, wobei die elastischen Verformungsmittel (11) mindestens ein Abstützelement (12) umfassen, das dazu bestimmt ist, mindestens eine Abstützung gegen mindestens einen Abschnitt der Magnetkarte (2) zu realisieren, um sie so zu verformen, dass die Magnetspur (9) der Magnetkarte (2) den Magnetlesekopf (6) bei einem Gleiten der Magnetkarte (2) in der Durchzieh-Zone (7) über ihre gesamte Länge kontaktiert.

4. Lesegerät (1) für Magnetkarte (2) nach Anspruch 3, wobei das Abstützelement (12) dazu bestimmt ist, eine Abstützung gegen einen Abschnitt der Magnetkarte (2), der sich dem magnetischen Lesekopf (6) gegenüber befindet, zu realisieren, um die Magnetspur (9) der Magnetkarte (2) gegen den magnetischen Lesekopf (6) zu drücken.

5. Lesegerät (1) für Magnetkarte (2) nach Anspruch 4, wobei das Abstützelement (12) eine in Richtung des magnetischen Lesekopfs (6) konvexe Form hat und eine Oberflächenkrümmung aufweist, die mit einer Oberflächenkrümmung des magnetischen Lesekopfs (6) identisch ist.

6. Lesegerät (1) für Magnetkarte (2) nach Anspruch 4 oder 5, wobei die elastischen Verformungsmittel (11) so ausgebildet sind, dass, in Ruhestellung, das Abstützelement (12) auf dem magnetischen Lesekopf (6) aufliegt, ohne Kraft auf diesen aufzubringen.

7. Lesegerät (1) für Magnetkarte (2) nach Anspruch 3, wobei die elastischen Verformungsmittel (11) zwei Abstützelemente (12) umfassen, die dazu bestimmt sind, eine Abstützung gegen zwei Abschnitte der Magnetkarte (2) zu realisieren, die sich auf beiden Seiten des magnetischen Lesekopfs (6) befinden, um die Magnetspur (9) der Magnetkarte (2) gegen den magnetischen Lesekopf (6) zu drücken.

8. Lesegerät (1) für Magnetkarte (2) nach einem der vorhergehenden Ansprüche, wobei die elastischen Verformungsmittel (11) mindestens drei elastische Rückstellelemente (13) umfassen, die dazu bestimmt sind, die elastischen Verformungsmittel (11) bei oder nach einem Gleiten der Magnetkarte (2) in der Durchzieh-Zone (7) in eine Ruhestellung zurückzustellen.

9. Elektronisches Zahlungsendgerät (3), umfassend ein Lesegerät (1) für Magnetkarte (2) nach einem der vorhergehenden Ansprüche.

10. Elektronisches Zahlungsendgerät (3), nach Anspruch 9, wobei die Durchzieh-Zone (7) zum Durchziehen einer Magnetkarte (2) von einem Schlitz gebildet ist, der in einem unteren Rand des elektronischen Zahlungsendgeräts (3) vorgesehen ist.

## Claims

1. Magnetic card (2) reader (1) comprising:
- an electronic card (5) which is intended to receive and process data coming from a magnetic card (2),
- a magnetic reading head (6) which is intended to read data contained in at least one magnetic strip (9) of a magnetic card and to transmit these data to the electronic card (5),
- a zone (7) for passage of a magnetic card, in which a magnetic card (2) is intended to slide and which comprises guide means (8) which are intended to guide the magnetic card (2) as the magnetic card (2) slides in the passage zone (7),
wherein the magnetic reading head (6) is fixedly mounted on the magnetic card reader (1),
- resilient deformation means (11) which are intended to come into contact with the magnetic card (2) so as to deform it when the magnetic card (2) slides in the passage zone (7) in order to allow the magnetic strip (9) of the magnetic card (2) to be read by the magnetic reading head (6), **characterised in that** the guide means (8) and the resilient deformation means (11) are integrally formed and thus form a single part.

2. Magnetic card (2) reader (1) according to claim 1, wherein the magnetic reading head (6) is welded to the electronic card (5).

3. Magnetic card (2) reader (1) according to claim 1 or 2, wherein the resilient deformation means (11) comprise at least one pressing member (12) intended to make at least one press against at least one portion of the magnetic card (2) in order to deform it such that the magnetic strip (9) of the magnetic card (2) is in contact with the magnetic reading head (6) over its entire length when the magnetic card (2) slides in the passage zone (7).

4. Magnetic card (2) reader (1) according to claim 3, wherein the pressing member (12) is intended to make a press against a portion of the magnetic card (2) facing the magnetic reading head (6) in order to press the magnetic strip (9) of the magnetic card (2) against the magnetic reading head (6).

5. Magnetic card (2) reader (1) according to claim 4, wherein the pressing member (12) has a convex shape towards the magnetic reading head (6) and its surface curvature is the same as that of the magnetic reading head (6).

6. Magnetic card (2) reader (1) according to claim 4 or 5, wherein the resilient deformation means (11) are configured so that, in the rest position, the pressing member (12) rests on the magnetic reading head (6) without applying any force on it.

7. Magnetic card (2) reader (1) according to claim 3, wherein the resilient deformation means (11) comprise two pressing members (12) intended to make a press against two portions of the magnetic card (2) located each side of the magnetic reading head (6) in order to press the magnetic strip (9) of the magnetic card (2) against the magnetic reading head (6).

8. Magnetic card (2) reader (1) according to any one of the preceding claims, wherein the resilient deformation means (11) comprise at least three elastic return members (13) intended to return the resilient deformation means (11) to a rest position when or after the magnetic card (2) slides in the passage zone (7).

9. Electronic payment terminal (3) comprising a magnetic card (2) reader (1) according to any one of the preceding claims.

10. Electronic payment terminal (3) according to claim 9, wherein the zone (7) for passage of a magnetic card (2) consists of a slot formed in a lower edge of the electronic payment terminal (3).
